# EUROPEAN PATENT APPLICATION

(11) **EP 4 528 437 A1**
(43) Date of publication of application: **26.03.2025**
(21) Application number: 23823077.5
(22) Date of filing: 12.06.2023
(51) Int. Cl.: G06F 3/0354

(54) **PEN TIP AND PREPARATION METHOD THEREFOR, AND ELECTRONIC STYLUS AND SMART TERMINAL**

(30) Priority: 14.06.2022 CN 202210668786
(71) Applicant: Huawei Technologies Co., Ltd., Shenzhen, Guangdong 518129 (CN)
(72) Inventor: WANG, Yueqi, Shenzhen, Guangdong 518129 (CN); DOU, Pengpeng, Shenzhen, Guangdong 518129 (CN); LIANG, Tianxiang, Shenzhen, Guangdong 518129 (CN); OUYANG, Shihong, Shenzhen, Guangdong 518129 (CN); HE, Zhongyu, Shenzhen, Guangdong 518129 (CN); YUAN, Liang, Shenzhen, Guangdong 518129 (CN)
(74) Representative: Epping - Hermann - Fischer
(86) International application number: PCT/CN2023/099679
(87) International publication number: WO 2023/241509

(57) **Abstract**

An embodiment of this application provides a tip. The tip is obtained by molding a composite material. The composite material includes a tip matrix material and fillers distributed in the tip matrix material. At least a part of the fillers are exposed from a pointed end of the tip. Hardness of the filler is greater than hardness of the tip matrix material. Roughness of the pointed end of the tip is increased, so that a friction force, of the tip, existing when the tip is used for writing on a writing medium can be increased. In addition, the fillers exposed from the pointed end of the tip may collide with the writing medium, and vibration may be generated due to intermittent collisions, so that an electronic pen using the tip can achieve writing experience comparable to that of paper writing. This application further provides a preparation method of the tip, the electronic pen using the tip, and an intelligent terminal.

## Description

This application claims priority to Chinese Patent Application No. 202210668786.9, filed with the China National Intellectual Property Administration on June 14, 2022 and entitled "TIP AND PREPARATION METHOD THEREOF, ELECTRONIC PEN, AND INTELLIGENT TERMINAL", which is incorporated herein by reference in its entirety.

### TECHNICAL FIELD

This application relates to the field of electronic pen technologies, and specifically, to a tip and a preparation method thereof, an electronic pen, and an intelligent terminal.

### BACKGROUND

A user may write on a touchscreen of a terminal device (such as a mobile phone or a tablet computer) by using an electronic pen, to improve convenience of human-machine interaction. While the electronic pen brings convenient experience of electronic writing to the user, the user also imposes an increasingly high requirement on writing experience of the electronic pen. It is well known that when a conventional writing tool such as a pencil or a pen is used for writing on paper, proper friction is generated between a tip and the paper under pressure of a hand, to generate good writing experience. When the electronic pen is used for writing on the touchscreen, writing vibration and resistance are weak, which is greatly different from conventional paper writing experience.

### SUMMARY

In view of this, embodiments of this application provide a tip and an electronic pen, so that writing experience of the electronic pen on a touchscreen can be comparable to writing experience of a conventional writing tool on paper.

Specifically, a first aspect of embodiments of this application provides a tip. The tip is obtained by molding a composite material. The composite material includes a tip matrix material and fillers distributed in the tip matrix material. At least a part of the fillers are exposed from a pointed end of the tip. Hardness of the filler is greater than hardness of the tip matrix material.

In the tip provided in this application, in addition to the tip matrix material, the fillers whose hardness is greater than that of the tip matrix material are further included, and the at least a part of the fillers are controlled to be exposed from the pointed end of the tip. In this way, roughness of the pointed end of the tip is increased, so that a friction force, of the tip, existing when the tip is used for writing on a writing medium can be increased. In addition, the fillers exposed from the pointed end of the tip may collide with the writing medium, and vibration may be generated due to intermittent collisions, so that an electronic pen using the tip can achieve writing experience comparable to that of paper writing.

In an implementation of this application, a friction coefficient of the pointed end of the tip ranges from 0.1 to 0.3. When the electronic pen including the tip is used for writing on a touchscreen, writing resistance caused by friction is greater than that of a conventional electronic pen, which helps improve writing experience.

In an implementation of this application, 400 to 40000 fillers are exposed from each square millimeter of the pointed end of the tip. Exposure density of the fillers on a surface of the pointed end of the tip is appropriate, which facilitates a large friction coefficient of the pointed end of the tip and low damage to a writing screen.

In an implementation of this application, in the fillers exposed from the pointed end of the tip, a spacing between adjacent fillers is greater than 0 µm and less than or equal to 100 µm. In this way, a case in which the friction coefficient of the pointed end of the tip cannot be effectively increased due to an excessively large spacing between adjacent fillers is avoided, evenness of distribution of the fillers at the pointed end of the tip can be high, and the exposure density can be appropriate.

In an implementation of this application, a maximum cross-sectional size of a part, of the filler, exposed from the pointed end ranges from 2 µm to 25 µm. This helps to ensure that a friction force between the pointed end of the tip and the touchscreen is not excessively small, and that the tip can collide with the touchscreen by using the fillers of this size during writing, to generate abundant vibration.

In an implementation of this application, the filler includes one or more of a continuous fiber, a chopped fiber, and a granular filler.

In an implementation of this application, when the filler is a continuous fiber or a chopped fiber, orientation directions of at least a part of fillers filled at the pointed end of the tip are perpendicular to a tangent plane of the pointed end of the tip. In this case, a sliding phenomenon of the electronic pen with the tip can be reduced during writing, and the friction force between the pointed end of the tip and the touchscreen can be better increased, so that writing experience of the electronic pen on the touchscreen is highly similar to paper writing experience.

In an implementation of this application, a length of the chopped fiber or a grain size of the granular filler is less than a thickness of the pointed end of the tip. This makes it convenient for the chopped fiber and the granular filler to be smoothly filled in the tip and exposed from the pointed end of the tip.

In an implementation of this application, the tip matrix material includes one or more of matrix resin and matrix rubber.

In some implementations of this application, the tip further includes a dielectric regulator.

In an implementation of this application, a dielectric constant of the tip is greater than or equal to 2.5. In this way, when the tip is used for a capacitive electronic pen, a sufficiently large signal can be generated to interact with the touchscreen, to display handwriting on the screen or implement a preset function.

A second aspect of embodiments of this application provides a tip preparation method, including the following steps:
first processing, into a bar, a composite material including a tip matrix material and fillers, where hardness of the filler is greater than hardness of the tip matrix material, and the filler includes one or more of a continuous fiber, a chopped fiber, and a granular filler; and when the filler is a continuous fiber or a chopped fiber, an orientation direction of the filler is parallel to a length direction of the bar; and
machining the bar to convert the bar into a tip of a required shape with at least a part of the fillers exposed from a pointed end of the tip.

The foregoing tip preparation method is applicable to processing of a tip including various shapes of fillers, and is simple in technology and easy to operate. In addition, when the filler is a continuous fiber or a chopped fiber, orientation directions of at least a part of fibers exposed from the pointed end of the tip may be perpendicular to a tangent plane of the pointed end of the tip, which further helps improve writing resistance of the pointed end of the tip on a touchscreen, so as to improve writing experience.

A third aspect of embodiments of this application also provides a tip preparation method, including the following step:
molding, in a tip mold, a composite material including a tip matrix material and fillers, to obtain a tip, where at least a part of the fillers are exposed from a pointed end of the tip, hardness of the filler is greater than hardness of the tip matrix material, and the filler includes one or more of a chopped fiber and a granular filler.

The composite material including the chopped fiber or the granular filler is suitable for direct molding to obtain the tip, without needing to be processed into a bar before machining. In the obtained tip, the at least a part of the fillers are exposed from the pointed end of the tip, which can improve roughness and writing vibration of the pointed end of the tip.

In some implementations of this application, the molding, in a tip mold, a composite material, to obtain a tip specifically includes:
providing the tip mold, where the tip mold has a material injection inlet and a tail end away from the material injection inlet, an exhaust outlet is disposed on the tail end, and a cavity shape of the tip mold is substantially consistent with a shape of a to-be-prepared tip, but a cross-sectional size of the tail end is less than a minimum cross-sectional size of the pointed end of the tip; and
injecting the composite material into the tip mold to obtain a pre-prepared product through molding, and cutting the pre-prepared product to obtain the tip of a required shape.

In this implementation, a size of the tail end of the used tip mold is different from that of the pointed end of the tip, and is smaller than that of the pointed end of the tip. In this way, a size of a bottom of a mold cavity is narrowed, and a closer distance to the tail end indicates higher consistency between an orientation of the chopped fiber and a movement direction of melt. After the pre-prepared product obtained through molding is cut, a degree of directional arrangement of chopped fiber fillers at the pointed end of the obtained tip is improved. Orientations of at least a part of chopped fibers in the chopped fiber fillers filled at the pointed end of the tip are perpendicular to the tangent plane of the pointed end of the tip. In addition, there are a large quantity of chopped fibers with such orientations, which can help increase a friction coefficient of the pointed end of the tip, and improve writing experience of an electronic pen using the tip.

A fourth aspect of embodiments of this application also provides a tip preparation method, including the following steps:
providing a tip mold, where a cavity of the tip mold includes a tip material filling section and an extended overflow section, the extended overflow section is away from a material injection inlet of the tip mold, an end part that is of the extended overflow section and that is away from the material injection inlet has an exhaust outlet, and a shape of the tip material filling section corresponds to a shape of a to-be-prepared tip; and
injecting, into the tip mold, a composite material including a tip matrix material and fillers, processing through molding the composite material into a tip coarse product, and then removing a part that is of the tip coarse product and that corresponds to the extended overflow section, to obtain a tip, where at least a part of the fillers are exposed from a pointed end of the tip, hardness of the filler is greater than hardness of the tip matrix material, and the filler includes a chopped fiber or a granular filler; and when the filler is a chopped fiber, orientations of at least a part of chopped fibers in fillers filled at the pointed end of the tip are perpendicular to a tangent plane of the pointed end of the tip.

When the tip is prepared by using the foregoing tip mold, existence of the extended overflow section increases procedures of melt of the composite material in the mold, so that orientation directions of chopped fibers in the melt are highly consistent with a movement direction of the melt, and phenomena of air entrapment and material disturbance in the tip material filling section are further reduced, to facilitate directional arrangement of the chopped fibers. In addition, moving space of the material melt in the extended overflow section is narrow, and the chopped fibers tend to stand upright in the extended overflow section. Accordingly, a degree of directional arrangement of the chopped fibers at an interface between the tip material filling section and the extended overflow section becomes higher, which facilitates orientations of a large quantity of chopped fibers perpendicular to the tangent plane of the pointed end of the tip.

A fifth aspect of embodiments of this application provides an electronic pen, including the tip according to the first aspect of embodiments of this application, or including a tip obtained by using the preparation method according to the second aspect, the third aspect, or the fourth aspect of embodiments of this application.

The electronic pen uses the foregoing tip provided in this application. Therefore, when the electronic pen is used for writing on a writing medium such as a touchscreen, a friction force, of the tip, existing when the tip is used for writing on the writing medium is large, and specific writing vibration is generated during writing, so that the electronic pen can achieve writing experience comparable to that of paper writing.

A sixth aspect of embodiments of this application provides an intelligent terminal. The intelligent terminal is connected to the electronic pen according to the fifth aspect of embodiments of this application as an input apparatus.

### BRIEF DESCRIPTION OF DRAWINGS

FIG. 1 is a diagram of a structure of an electronic pen according to an embodiment of this application;
FIG. 2a is a diagram of a structure of a tip filled with continuous fiber fillers according to an embodiment of this application;
FIG. 2b is a diagram of a structure of a tip filled with chopped fiber fillers according to an embodiment of this application;
FIG. 2c is a diagram of a structure of a tip filled with granular fillers according to an embodiment of this application;
FIG. 3a is a processing diagram of a tip filled with continuous fiber fillers according to an embodiment of this application;
FIG. 3b is a processing diagram of molding a tip filled with granular fillers by using a mold according to an embodiment of this application;
FIG. 3c is a processing diagram of molding a tip filled with chopped fiber fillers by using a mold according to an embodiment of this application;
FIG. 4 is a scanning electron microscope (Scanning Electron Microscope, SEM) photo of a surface of a pointed end of a tip according to Embodiment 1 of this application;
FIG. 5 summarizes writing vibration effect, of an electronic pen in Embodiment 1 in which quartz granules are added to a tip and an electronic pen in a comparative example 1 in which no quartz granule is added to a tip, on a touchscreen and writing vibration effect of a pencil on paper.
FIG. 6 is a SEM photo of a surface of a pointed end of a tip according to Embodiment 2 of this application;
FIG. 7 summarizes writing vibration effect, of an electronic pen in Embodiment 2 in which chopped carbon fibers are added to a tip and an electronic pen in a comparative example 2 in which no carbon fiber is added to a tip, on a touchscreen and writing vibration effect of a pencil on paper;
FIG. 8 is a SEM photo of a surface of a pointed end of a tip according to Embodiment 3 of this application; and
FIG. 9 summarizes writing vibration effect, of an electronic pen in Embodiment 3 in which continuous polyethylene terephthalate fibers are added to a tip and an electronic pen in a comparative example 3 in which no continuous polyethylene terephthalate fiber is added to a tip, on a touchscreen and writing vibration effect of a pencil on paper.

### DESCRIPTION OF EMBODIMENTS

The following describes embodiments of this application with reference to the accompanying drawings in embodiments of this application.

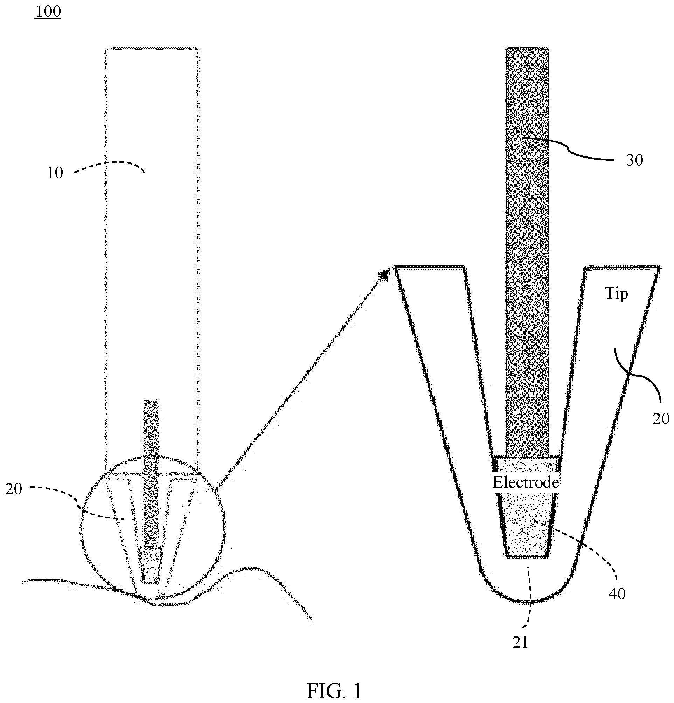

FIG. 1 is a diagram of a structure of an electronic pen according to an embodiment of this application. The electronic pen 100 includes a pen barrel 10 and a tip 20 connected to the pen barrel. The tip 20 has a pointed end 21, and the pointed end 21 is away from the pen barrel 10. The tip 20 is disposed at one end of the pen barrel 10 in a length direction, and may be specifically connected to the pen barrel 10 by using a connection screw 30. The connection screw 30 may be partially accommodated in accommodation space delimited in the pen barrel 10. The electronic pen shown in FIG. 1 may be an active capacitive pen. In this case, the electronic pen 100 further includes an electrode 40. The tip 20 further has accommodation space. The electrode 40 is accommodated in the accommodation space of the tip, and is electrically connected to the connection screw 30. A main control chip (not shown in FIG. 1) and the like are further disposed in the accommodation space in the pen barrel 10, and the main control chip is electrically connected to the electrode 40 connected to the tip.

When the tip of the existing electronic pen 100 is used for writing on a touchscreen medium, interface friction between the tip and the touchscreen medium is small, writing resistance is small, vibration is weak, and resulting writing experience cannot be comparable to writing experience of a conventional writing tool such as a pencil or a pen on paper. Based on this, this application provides a tip, to improve writing experience of an electronic pen on a touchscreen.

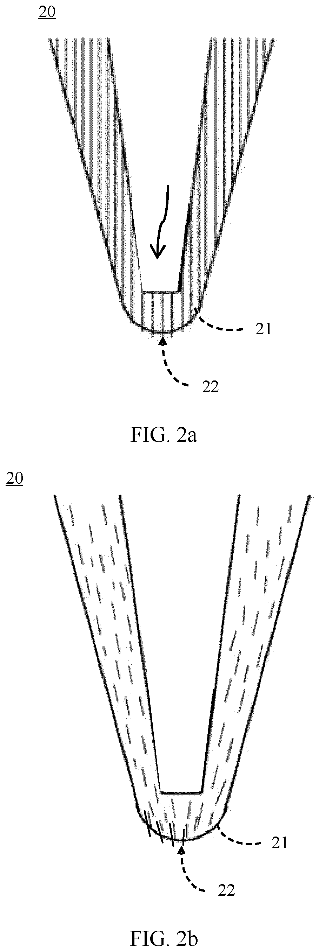

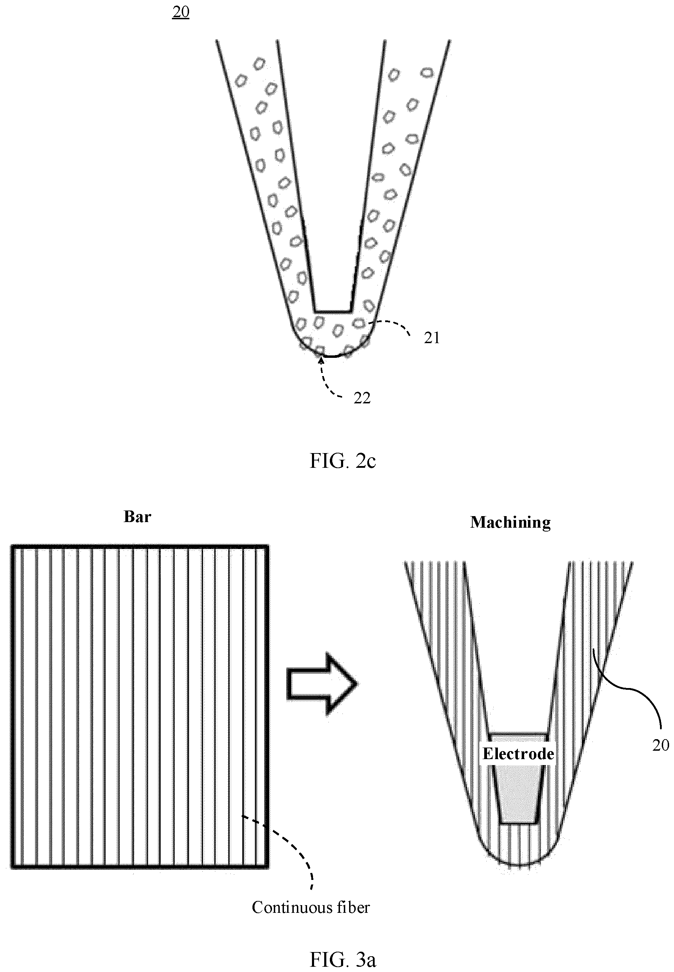

Refer to FIG. 2a, FIG. 2b, and FIG. 2c together. An embodiment of this application provides a tip. The tip 20 is obtained by molding a composite material. The composite material includes a tip matrix material and fillers distributed in the tip matrix material. At least a part of the fillers 22 are exposed from a pointed end 21 of the tip 20. Hardness of the filler 22 is greater than hardness of the tip matrix material.

In the tip provided in this application, a composition material of the tip 20 includes the tip matrix material and the fillers whose hardness is greater than that of the tip matrix material, and the at least a part of the fillers 22 are controlled to be exposed from the pointed end 21 of the tip. In this way, roughness of the pointed end of the tip is increased, and friction of the tip on a writing medium can be increased. In a writing process of the tip, the fillers exposed from the pointed end of the tip may collide with the writing medium (for example, a touchscreen), and generate changing resistance (that is, vibration) in constant collisions, to achieve writing experience comparable to that of paper writing. The tip 20 may be suitable for being used as a tip of the electronic pen, but may not be limited to being used only for the electronic pen.

In this application, that "at least a part of the fillers 22 are exposed from a pointed end 21 of the tip 20" may be understood as follows: The filler 22 may be observed from a surface of the pointed end 21 of the tip, where a height at which the filler 22 is exposed from the pointed end 21 may be zero (in other words, a surface that is of the filler 22 and that is close to the pointed end 21 is flush with the surface of the pointed end 21), or any non-zero value (in this case, the filler 22 protrudes from the surface of the pointed end 21). In addition, that "hardness of the filler 22 is greater than hardness of the tip matrix material" may specifically mean that Mohs hardness of the filler 22 is greater than Mohs hardness of the tip matrix material. Generally, the Mohs hardness of the filler 22 ranges from 1 to 4, and may be measured by using a Mohs hardness tester.

The pointed end 21 of the tip is an end part that is away from the pen barrel 10 when the tip 20 is assembled with the pen barrel 10 in FIG. 1. A cross-sectional width of the pointed end 21 gradually decreases in a direction from the pen barrel 10 to the tip 20. The pointed end 21 may be a cone shape (that is, a surface contour of the pointed end 21 includes intersecting straight lines, and a cross-sectional shape of the pointed end 21 may be a triangle, a quadrilateral, or the like), or a surface contour of the pointed end 21 may be a curve, for example, an arc or a parabola. The pointed end 21 has a specific thickness. **In** FIG. 2a to FIG. 2c, the tip 20 further has accommodation space (indicated by a solid arrow) to accommodate the electrode 40 mentioned in FIG. 1. The pointed end 21 may be considered as a part, of the tip 20, located below the accommodation space. It may be understood that the thickness of the pointed end 21 is not unchanged in the direction from the pen barrel 10 to the tip 20.

In an implementation of this application, a friction coefficient of the pointed end 21 of the tip ranges from 0.1 to 0.3. In this way, when the electronic pen 100 including the tip 20 is used for writing on the touchscreen, interface roughness is appropriate, and writing resistance caused by friction is greater than that of a conventional electronic pen. In addition, during writing, the fillers intermittently collide with the touchscreen to generate vibration, which is substantially close to conventional paper writing experience. In some implementations, the friction coefficient of the pointed end 21 ranges from 0.12 to 0.23.

In an implementation of this application, the height of a part, of the filler 22, exposed from the pointed end 21 of the tip ranges from 0 µm to 100 µm. The height may be specifically 0.5 µm, 1 µm, 1.5 µm, 2 µm, 5 µm, 10 µm, 20 µm, 30 µm, 50 µm, 80 µm, or the like. In some implementations, the height may range from 0.2 µm to 50 µm. In this way, the roughness of the pointed end 21 of the tip can be better increased.

In an implementation of this application, 400 to 40000 fillers 22 are exposed from each square millimeter of the pointed end 21. In this way, a case in which the surface roughness of the pointed end 21 of the tip is low because distribution density of the fillers is excessively low is avoided, and a case in which a risk of wear and tear on a writing screen is increased because the distribution density of the fillers is excessively high is avoided. In some implementations, 1000 to 10000 fillers are exposed from each square millimeter of the pointed end of the tip. For example, there may be 2000 to 5000 fillers. In this case, exposure density of the fillers on a surface of the pointed end of the tip is more appropriate, which better facilitates a large friction coefficient of the pointed end of the tip and low damage to the writing screen.

In an implementation of this application, in the plurality of fillers exposed from the pointed end 21, a spacing between adjacent fillers 22 is greater than 0 µm and less than or equal to 100 µm. In this way, a case in which the friction coefficient of the pointed end of the tip cannot be effectively increased due to an excessively large spacing between adjacent fillers is avoided. In some implementations, the spacing may be 1 µm to 50 µm, for example, 2 µm to 40 µm. In this case, the distribution spacing of adjacent fillers is appropriate, and distribution evenness and the exposure density of the fillers at the pointed end of the tip can also be appropriate, to ensure that the friction coefficient of the pointed end of the tip is within a proper range.

In an implementation of this application, a maximum cross-sectional size of the part, of the filler 22, exposed from the pointed end 21 ranges from 2 µm to 25 µm. In this way, a horizontal size of the filler protruding from the pointed end of the tip is appropriate. A case in which a friction force between the pointed end of the tip and the touchscreen is excessively small and writing is excessively smooth due to an excessively small horizontal size is avoided, and a case in which writing resistance is excessively large and the touchscreen is damaged due to an excessively large horizontal size of the filler is avoided. In addition, it can be ensured that the exposed filler of an appropriate size can effectively collide with the touchscreen and generate abundant vibration. In some implementations, the maximum cross-sectional size of the part, of the filler 22, exposed from the pointed end 21 ranges from 5 µm to 10 µm.

It may be understood that a cross-sectional size of a part, of a granular filler, exposed from the pointed end of the tip may change with a distance between the granular filler and the pointed end of the tip, and a maximum cross-sectional size of the part, of the granular filler, exposed from the pointed end of the tip is less than or equal to a grain size of the granular filler. For a fiber-like filler such as a continuous fiber or a chopped fiber, a cross-sectional size of a part, of the fiber-like filler, exposed from the pointed end of the tip remains unchanged, that is, is a diameter of the fiber. That is, diameters of the chopped fiber and the continuous fiber may independently range from 2 µm to 25 µm, for example, range from 5 µm to 10 µm.

In an implementation of this application, the filler in the tip may include one or more of a continuous fiber, a chopped fiber, and a granular filler. When the filler 22 in the tip is a continuous fiber or a chopped fiber (which may be collectively referred to as the "fiber-like filler"), as shown in FIG. 2a and FIG. 2b, orientation directions (that is, length directions or extension directions of fiber-like fillers) of at least a part of the fillers 22 in the fillers filled at the pointed end of the tip are perpendicular to a tangent plane of the pointed end 21 of the tip. The tangent plane may be understood as a plane on which a tangent line made at each position of the surface of the pointed end of the tip is located. Because not all points on the surface of the pointed end 21 are coplanar, it may be understood that included angles between various tangent planes at the pointed end 21 and a horizontal direction may be different. Being "perpendicular" herein is not limited to that an included angle between the orientation direction of the filler 22 and the tangent plane of the pointed end 21 is 90°. It may also be approximately considered as perpendicular when the included angle ranges from 70° to 89.9°. That is, the orientation direction of the fiber-like filler and the tangent plane of the pointed end may be considered as perpendicular when the included angle between the orientation direction of the fiber-like filler and the tangent plane of the pointed end ranges from 70° to 90°.

The orientation directions of the part of fillers 22 are controlled to be perpendicular to the tangent plane of the pointed end 21. That is, an included angle between the orientation direction of the filler and a writing plane of the tip is perpendicular. In this way, a sliding phenomenon can be reduced during writing, and the friction force between the pointed end of the tip and the touchscreen can be better increased, so that writing experience of the electronic pen on the touchscreen is more similar to paper writing experience.

In an implementation of this application, a length of the chopped fiber is less than the thickness of the pointed end 21 of the tip. This can make it convenient for the chopped fiber to be smoothly filled in the tip and exposed from the pointed end of the tip. The length of the chopped fiber may range from 0.1 mm to 1 mm and is, for example, 0.2 mm, 0.5 mm, or 0.8 mm. The chopped fiber of a proper length also helps to ensure dispersion of the chopped fiber in an injection molding process and ensure that the tip has good injection molding effect, and is not prone to having floating fibers.

Similarly, in an implementation of this application, the grain size of the granular filler is less than the thickness of the pointed end 21 of the tip. This also makes it convenient for the granular filler to be smoothly filled in the tip.

In an implementation of this application, the hardness of the filler 22 is less than hardness of the writing medium of the electronic pen 100. For the electronic pen 100, the writing medium of the electronic pen 100 may be the touchscreen. The hardness of the filler is greater than that of the tip matrix material and less than that of the writing medium. In this way, in a process of using the electronic pen for writing, with wear and tear of the tip matrix material, the filler can be exposed from the tip matrix material, to increase a friction force of the tip on the writing medium. At the same time, the writing medium (for example, a touchscreen of an electronic device) is not scratched.

In an implementation of this application, the chopped fiber and the continuous fiber may be independently selected from one or more of a glass fiber, a carbon fiber, a mineral fiber (for example, a basalt fiber), a plant fiber, a polymer fiber (for example, an aramid fiber, a polyethylene terephthalate fiber, a polyester fiber, a polyamide fiber, a polyacrylonitrile fiber, a polyvinyl chloride fiber, and an ultra-high molecular weight polyethylene fiber), and the like. The granular filler includes one or more of talcum, mica, calcium carbonate, barium sulfate, quartz, and glass microspheres. In an implementation of this application, in the tip 20, a mass proportion of the fillers 22 (that is, a proportion of mass of the fillers to mass of the composite material) may range from 50% to 95% and may be, for example, 55%, 60%, 70%, 80%, or 90%.

In this application, the tip matrix material may include one or more of matrix resin and matrix rubber. The matrix resin may include but is not limited to one or more of epoxy resin, phenolic resin, polyacrylic resin, polyurethane, polyamide resin, polysulfone resin, polyketone resin, polysiloxane, polycarbonate, polyamide, polyimide, polyester, polyformaldehyde resin, polyethylene, polypropylene, polystyrene, polyvinyl chloride, and the like. For the matrix rubber, one or more of the following may be listed: styrene-butadiene rubber, nitrile butadiene rubber, chloroprene rubber, silicon rubber, and the like.

In some implementations of this application, the tip 20 may further include a dielectric regulator. It may be understood that the dielectric regulator may regulate dielectric properties of the tip, for example, may make a dielectric constant of the tip not excessively small. In addition, the foregoing fillers (especially conductive fiber-like fillers) added to the tip can also regulate the dielectric properties of the tip. The dielectric regulator may include but is not limited to one or more of titanium dioxide, hindered phenol, phosphite ester, and the like. Certainly, in some other implementations of this application, the tip may further include one or more additives of a plasticizer, a colorant, a dispersing additive, and the like.

In an implementation of this application, the dielectric constant of the tip 20 is greater than or equal to 2.5. In this way, a capacitance value of the tip is high. When the tip is used for a capacitive electronic pen, a sufficiently large signal can be generated to interact with the touchscreen, to display handwriting on the screen, implement a preset function, or the like. The dielectric constant herein is a relative dielectric constant of the tip relative to air.

An embodiment of this application further provides a tip preparation method, including the following steps:
S101: First process, into a bar, a composite material including a tip matrix material and fillers, where hardness of the filler is greater than hardness of the tip matrix material, and the filler includes one or more of a continuous fiber, a chopped fiber, and a granular filler; and when the filler is a continuous fiber or a chopped fiber, an orientation direction of the filler is parallel to a length direction of the bar.
S102: Machine the bar to convert the bar into a tip of a required shape with at least a part of the fillers exposed from a pointed end of the tip.

In step S101, a manner of processing the composite material into the bar may include an injection molding method, a pultrusion modeling method, a compression molding method, a resin transfer molding method, a solution casting method, a calendering method, or the like. In some implementations of this application, the injection molding method and the pultrusion modeling method are particularly suitable for preparing the bar used for the tip. A composite material used for processing the bar by using the injection molding method may be granular (for example, when the filler is a chopped fiber or a granular filler, the composite material may become a molten state at a specific temperature), or in a sheet shape (for example, when the filler is a continuous fiber). In this application, when the tip matrix material is matrix resin, the matrix resin may be thermoplastic resin, thermosetting resin, or the like, which may be specifically determined based on a used processing and molding technology. For parameter requirements such as a material, a size, and hardness of various types of fillers, refer to the foregoing descriptions in this application. FIG. 3a shows a processing manner of a tip 20 by using an example in which a filler is a continuous fiber. In FIG. 3a, a composite material including continuous fiber fillers is first processed into a bar, and then machining (for example, cutting, digging, and surface polishing) is performed on the bar to obtain a tip of a required shape. Machining may be specifically a computer numerical control (computer numerical control, CNC for short) machine tool processing technology, or the like. In the tip processing manner shown in FIG. 3a, in the first obtained bar, an orientation direction of the continuous fiber is parallel to a length direction of the bar. This helps ensure that at least a part of the continuous fiber fillers are arranged in a directional manner at a pointed end 21 of the tip. As shown in FIG. 3a, orientation directions of at least a part of a plurality of continuous fibers filled at the pointed end 21 of the tip are perpendicular to a tangent plane of the pointed end 21 of the tip.

It should be noted that the processing manner shown in FIG. 3a may be further applicable to tip processing existing when the fillers included in the tip are chopped fibers or granular fibers. When the filler is a chopped fiber, orientation directions of at least a part of chopped fibers in the obtained bar are parallel to the length direction of the bar. In this way, after machining, it can still be ensured that the at least a part of chopped fibers are arranged in a directional manner at the pointed end of the obtained tip, and a part of chopped fibers are exposed from the pointed end.

The foregoing tip preparation method in this application is applicable to processing of a tip including various shapes of fillers, and at least a part of the fillers may be exposed from a pointed end of the tip. In addition, when the filler is a continuous fiber or a chopped fiber, orientation directions of at least a part of fibers exposed from the pointed end of the tip may be perpendicular to a tangent plane of the pointed end of the tip.

An embodiment of this application further provides a tip preparation method, including the following step:
molding, in a tip mold, a composite material including a tip matrix material and fillers, to obtain a tip, where at least a part of the fillers are exposed from a pointed end of the tip, hardness of the filler is greater than hardness of the tip matrix material, and the filler includes one or more of a chopped fiber and a granular filler.

In the foregoing preparation method, the composite material is directly molded into the tip of a required shape. A specific molding manner may be an injection molding method, a pultrusion modeling method, a solution casting method, or the like. Considering that a tip of an electronic pen is small in size and has a protruding part, the preparation method is particularly suitable for processing a tip whose fillers are chopped fibers or granular fillers.

The composite material is molded in the tip mold. In the obtained tip, the at least a part of the fillers are exposed from the pointed end of the tip. This can increase roughness of the pointed end of the tip, increase a friction force, of the tip, existing when the tip is used for writing on a writing medium, and generate specific writing vibration during writing, so that the electronic pen can achieve writing experience comparable to that of paper writing.

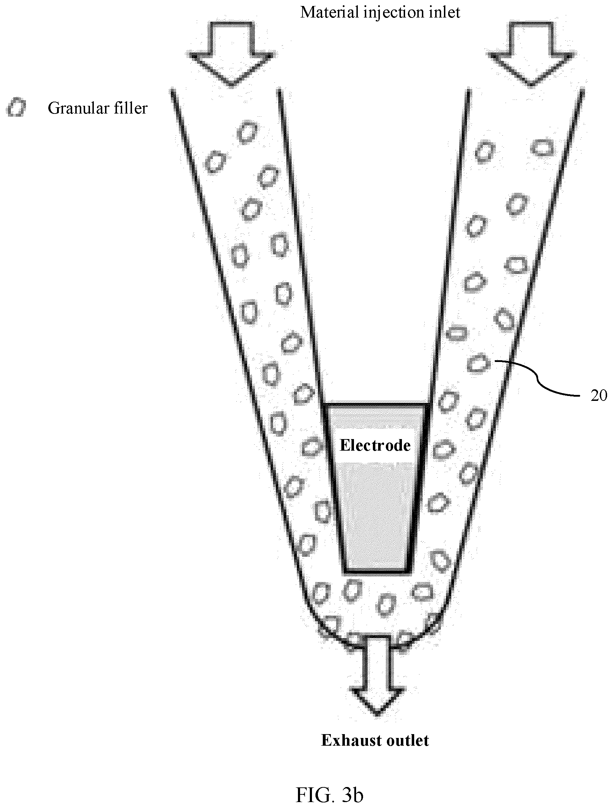

FIG. 3b is a diagram of processing a tip in a mold in an injection molding manner by using a granular filler as an example. Because the to-be-prepared tip is an active capacitive electronic pen, the electrode 40 mentioned in FIG. 1 is first placed in the tip mold used for preparing the tip (a cavity shape of the mold is consistent with a shape of the to-be-prepared tip), and then the composite material is injected through a material injection inlet of the mold, to fill a cavity of the used mold. Redundant materials may be discharged through an exhaust outlet at a bottom of the mold. Although FIG. 3b shows that the tip mold has two material injection inlets, in another implementation, there may be one material injection inlet. It should be further noted that, although

FIG. 3b shows that the exhaust outlet is provided at a tail end that is of the mold and that is away from an injection molding inlet, it may be understood that the tail end is also a working end of the mold in FIG. 3b, and the tail end may not be provided with the exhaust outlet.

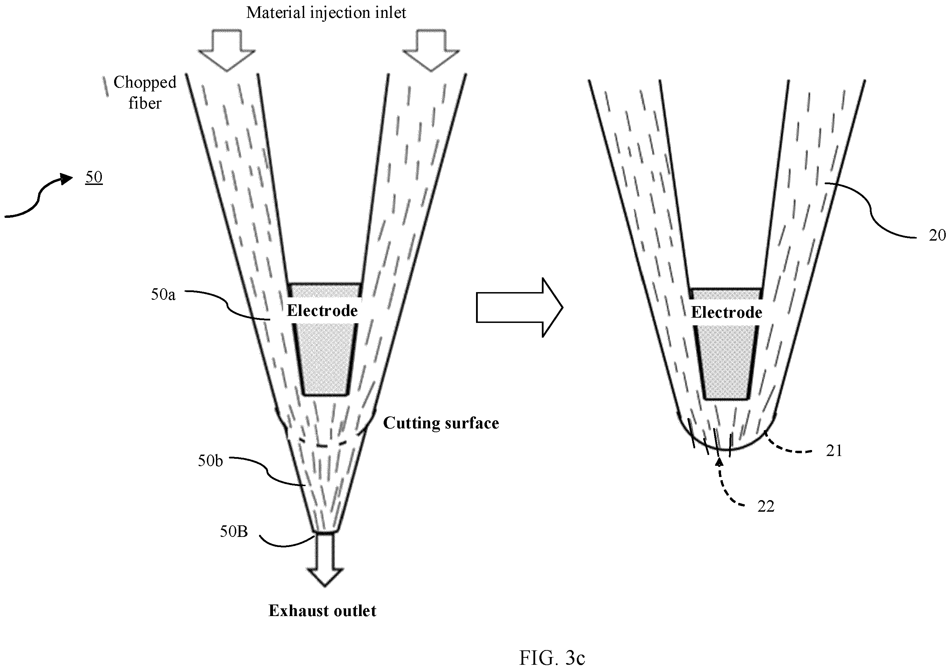

In some implementations of this application, the "molding, in a tip mold, a composite material including a tip matrix material and fillers, to obtain a tip" specifically includes:
S201: Provide the tip mold. Refer to FIG. 3c. The tip mold 50 has a material injection inlet and a tail end 50B away from the material injection inlet. A cavity shape of the tip mold 50 is substantially consistent with a shape of a to-be-prepared tip, but a cross-sectional size of the tail end 50B is less than a minimum cross-sectional size of the pointed end 21 of the tip (FIG. 3c shows, by using a dashed line, a cutting surface for cutting a pre-prepared product, and a horizontal size of the cutting surface corresponds to the minimum cross-sectional size of the pointed end of the tip). An exhaust outlet is provided on the tail end 50B.
S202: Inject the composite material into the tip mold to obtain the pre-prepared product through molding, and cut the pre-prepared product to obtain the tip of the required shape.

The preparation method provided in this implementation is particularly suitable for preparing a tip including chopped fiber fillers. The tip mold 50 shown in FIG. 3c is different from the mold shown in FIG. 3b in that a contour of the mold is extended to some extent. Correspondingly, an end surface size of the tail end 50B of the tip mold 50 in FIG. 3c is less than an end surface size of the tail end at which the exhaust outlet in the tip mold in FIG. 3b is located. When the mold in FIG. 3c is used for preparing the tip, because a size of a bottom of a mold cavity is narrowed, a closer distance of material melt to the tail end 50B indicates higher consistency between an orientation direction of the chopped fiber and a movement direction of the melt. In this way, at the pointed end of the tip obtained by cutting the molded pre-prepared product, an included angle between an orientation of the chopped fiber and a tangent plane of the pointed end is closer to 90°. Therefore, use of the tip mold improves a degree of directional arrangement of the chopped fiber fillers at the pointed end of the tip, to help increase a friction coefficient at the pointed end of the tip, and improve writing experience of the electronic pen using the tip on the writing medium such as a touchscreen.

In an implementation of this application, the cross-sectional size of the tail end 50B may be specifically a cross-sectional diameter of the tail end 50B. The minimum cross-sectional size of the pointed end 21 of the tip may specifically be a diameter of a minimum cross section of the pointed end 21 of the tip. In some implementations, it may alternatively be expressed as follows:

A diameter of a circle corresponding to an end surface of the tail end 50B is less than a diameter of a circle corresponding to an end surface of the pointed end 21 of the tip.

An embodiment of this application further provides a tip preparation method. Refer to FIG. 3c. The method includes the following steps:
S301: Provide a tip mold, where a cavity of the tip mold includes a tip material filling section 50a and an extended overflow section 50b, the extended overflow section 50b is away from a material injection inlet of the tip mold, an end part (that is, a tail end of the tip mold) that is of the extended overflow section 50b and that is away from the material injection inlet has an exhaust outlet, and a shape of the tip material filling section 50a is consistent with a shape of a to-be-prepared tip.
S302: Mold, in the tip mold, a composite material including a tip matrix material and fillers, to obtain a tip coarse product; remove a part that is of the tip coarse product and that corresponds to the extended overflow section 50b, to obtain a tip, where at least a part of the fillers are exposed from a pointed end of the tip, hardness of the filler is greater than hardness of the tip matrix material, and the filler includes a chopped fiber or a granular filler; and when the filler is a chopped fiber, orientations of at least a part of chopped fibers in fillers filled at the pointed end of the tip are perpendicular to a tangent plane of the pointed end of the tip.

Herein, the tip preparation method provided in steps S301 and S302 may be considered as an improvement to the method shown in FIG. 3b. In step S301, the used tip mold is different from the mold in FIG. 3b. In addition to having the tip material filling section 50a corresponding to the required tip shape, the tip mold further includes the extended overflow section 50b connected to the tip material filling section 50a. Compared with a finally required finished tip product, the obtained tip coarse product has the additional part corresponding to the extended overflow section 50b. After this part is removed, a shape of a finally obtained tip sample is consistent with that shown in FIG. 3b. An interface between the tip material filling section 50a and the extended overflow section 50b is a removal interface at which partial removal is performed on the obtained tip coarse product in step S302. In step S302, "remove a part that is of the tip coarse product and that corresponds to the extended overflow section 50b" may alternatively be expressed as: performing cutting along the interface that is of the tip coarse product and that corresponds to the tip material filling section 50a and the extended overflow section 50b.

FIG. 3c is a diagram of processing a tip in a mold in an injection molding manner by using an example in which a filler is a chopped fiber. Existence of the extended overflow section 50b increases procedures of melt of the composite material in the mold in an injection molding process, and can ensure that after the material melt enters the mold through the material injection inlet under specific pressure, orientation directions of chopped fibers in the melt is highly consistent with a movement direction of the melt, to facilitate directional arrangement of the chopped fibers. In addition, the extended overflow section 50b may be considered as an extension of a contour of the tip material filling section 50a to some extent. A space width of the extended overflow section 50b of the mold cavity continuously decreases along a flow direction of the melt. Space of the material melt in the extended overflow section 50b becomes narrower, and flow resistance becomes larger. A closer distance of the material melt to a bottom of the extended overflow section 50b indicates that orientation directions of more chopped fibers have higher perpendicularity with the tail end of the mold. Therefore, existence of the extended overflow section 50b correspondingly improves a degree of directional arrangement of the chopped fibers in the melt at the interface that corresponds to the tip material filling section 50a and the extended overflow section 50b. After the part that is of the tip coarse product and that corresponds to the extended overflow section 50b is removed, in the finally obtained tip, the orientations of the at least a part of chopped fibers in the fillers filled at the pointed end of the tip are perpendicular to or approximately perpendicular to the tangent plane of the pointed end of the tip. In addition, existence of the extended overflow section 50b further greatly reduces phenomena of air entrapment and material disturbance of the material in the tip material filling section, to reduce a phenomenon of disordered fiber arrangement and make fiber arrangement more regular. Therefore, use of the tip mold improves the degree of directional arrangement of the chopped fiber fillers at the pointed end of the tip.

The preparation method using the tip mold is particularly suitable for preparing a tip including chopped fiber fillers. Certainly, the preparation method can also be used to prepare a tip including granular fillers. The preparation method is simple in technology and is easy to operate, and has a high yield rate of molding the tip, and a large friction coefficient of the pointed end of the tip. This further helps improve writing experience of an electronic pen using the tip on a writing medium such as a touchscreen.

In an implementation of this application, the tip material filling section 50a and the extended overflow section 50b may be considered as artificially delimited and virtual chambers (as shown in FIG. 3c), and the interface between the tip material filling section 50a and the extended overflow section 50b is determined based on a shape parameter of a finally required tip sample.

In step S302, a manner of molding the composite material into the tip coarse product may be an injection molding method, a pultrusion modeling method, a solution casting method, or the like. The part that is of the tip coarse product and that corresponds to the extended overflow section 50b may be removed through CNC processing, cutting, and the like.

An embodiment of this application further provides an electronic pen, and the electronic pen includes the foregoing tip in embodiments of this application.

For a structure of the electronic pen, refer to the foregoing descriptions about FIG. 1 in this application. It should be noted that, although an active capacitive electronic pen is used as an example in FIG. 1, it may be understood that the electronic pen may alternatively be a passive capacitive electronic pen, an electronic pen of another type, or the like.

The electronic pen uses the tip provided in this application, and roughness of a pointed end of the tip is large. Therefore, when the electronic pen is used for writing, a friction force, of the tip, existing when the tip is used for writing on a writing medium is large, and specific writing vibration is generated during writing, so that the electronic pen can achieve writing experience comparable to that of paper writing.

An embodiment of this application further provides an intelligent terminal. The intelligent terminal is connected to the foregoing electronic pen in embodiments of this application as an input apparatus. Writing experience of the electronic pen is strong when the electronic pen is used for writing on the intelligent terminal, and may be comparable to writing experience of a conventional writing tool on paper.

The intelligent terminal is used as a writing device, and has a touchscreen to provide a writing medium of the electronic pen. The intelligent terminal may be a product such as a smartphone, a

tablet computer, a notebook computer, an e-reader (such as a Kindle), a portable computer, a digital camera, an intelligent wearable device (such as a smartwatch or a smart band), or an electric vehicle.

The intelligent terminal further includes a receiving apparatus and a transmitting apparatus. The receiving apparatus is configured to receive a transmitting signal of a transmit antenna of the electronic pen, and the transmitting apparatus is configured to transmit a signal to a receive antenna of the electronic pen, to complete information exchange with the electronic pen. It may also be understood that the intelligent terminal and the electronic pen form an electronic pen system.

Embodiments of this application are further described below by using a plurality of specific embodiments. Embodiments of this application are not limited to the following specific embodiments.

### Embodiment 1

An electronic pen is provided, and a diagram of a structure of a tip of the electronic pen may be shown in FIG. 2c. The tip is obtained by molding a composite material including polyamide resin and granular fillers. The granular fillers are specifically quartz granules with grain sizes of 2 µm to 10 µm. Hardness of the granular filler is greater than that of the polyamide resin, and mass of the granular filler accounts for approximately 50% to 60% of total mass of the composite material. A specific molding manner of the tip may be shown in FIG. 3b.

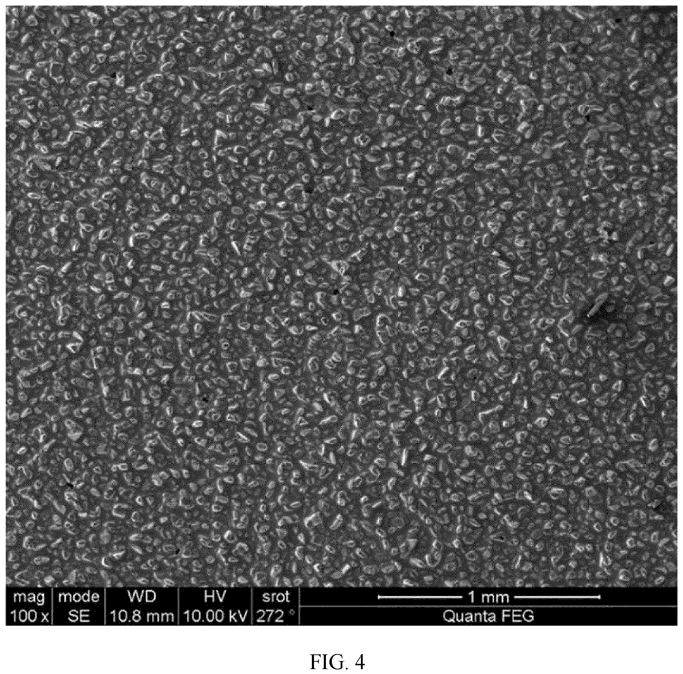

A dielectric constant of the tip is approximately 2.5, and a thickness of a pointed end of the tip ranges from 0.3 mm to 0.5 mm. At least a part of the quartz granules are exposed from the pointed end of the tip. 5000 quartz granules are exposed from each square millimeter of the pointed end of the tip. In the quartz granules exposed from the pointed end of the tip, a spacing between adjacent quartz granules is approximately 40 µm. Surface roughness Ra of the pointed end of the tip is approximately 6 µm, and a friction coefficient of the pointed end of the tip is approximately 0.20. FIG. 4 is a SEM photo of a surface of the pointed end of the tip according to Embodiment 1 of this application. It can be learned from FIG. 4 that, after the quartz granules are introduced, the surface roughness of the tip in Embodiment 1 is increased, the grain sizes of the quartz granules are approximately 2 µm to 10 µm, and the spacing between adjacent quartz granules is approximately 40 µm.

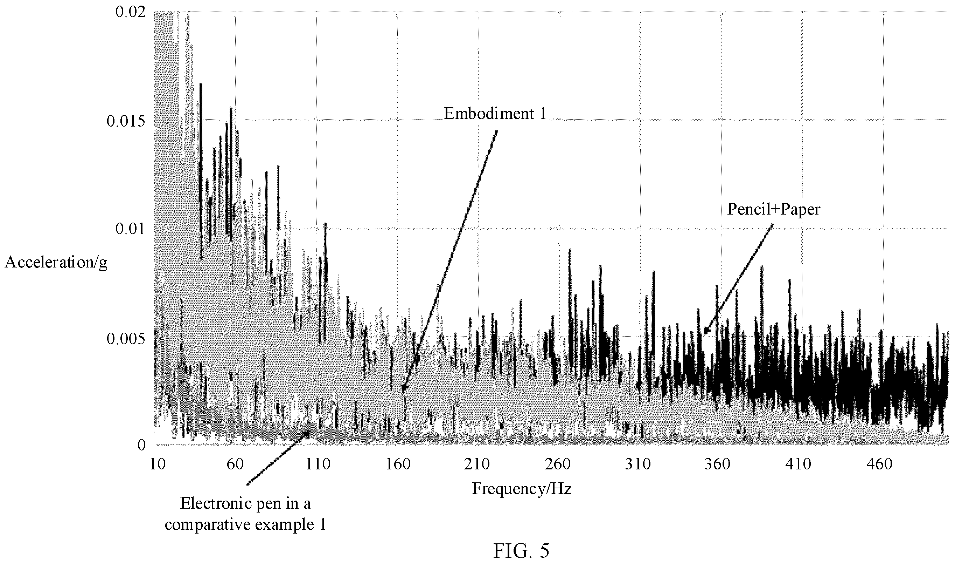

To highlight writing vibration effect of the electronic pen in this embodiment of this application, a triaxial accelerometer is bound at a tip position. During writing, accelerations in three directions x, y, and z are measured by using the accelerometer, and frequency domain signals are obtained through Fourier transformation. Amplitudes in an interval of 50 Hz to 500 Hz are compared, to measure vibration effect of different tips. FIG. 5 summarizes writing vibration effect of, the electronic pen in Embodiment 1 in which the quartz granules are added to the tip and an electronic pen in a comparative example 1 in which a tip includes only polyamide resin, on a touchscreen and writing vibration effect of a pencil on paper. It can be learned from FIG. 5 that, when the electronic pen in Embodiment 1 of this application is used for writing on the touchscreen, a similarity between an amplitude of the electronic pen in a frequency band of 50 Hz to 500 Hz and a writing amplitude of the pencil on the paper may reach more than 90%. In addition, writing vibration of the electronic pen in Embodiment 1 of this application is clearly higher than that of the electronic pen in the comparative example 1 to which no filler is added.

### Embodiment 2

A tip for an electronic pen is provided. The tip is obtained by molding a composite material including polyformaldehyde resin and chopped fibers. The chopped fibers are specifically carbon fibers with diameters of 5 µm to 10 µm. Hardness of the chopped fiber is greater than that of the polyformaldehyde resin, and mass of the chopped fiber is approximately 15% to 40% of mass of the composite material. A molding manner of the tip may be shown in FIG. 3c. Specifically, the polyformaldehyde resin, the chopped fibers, and another additive are mixed by using a twin-screw extruder, and are extruded and granulated into a granular composite material. Then, the granular composite material is injected into a mold cavity with an extended overflow section by using an injection molding machine and molded, and then is mechanically cut into the tip of a required shape.

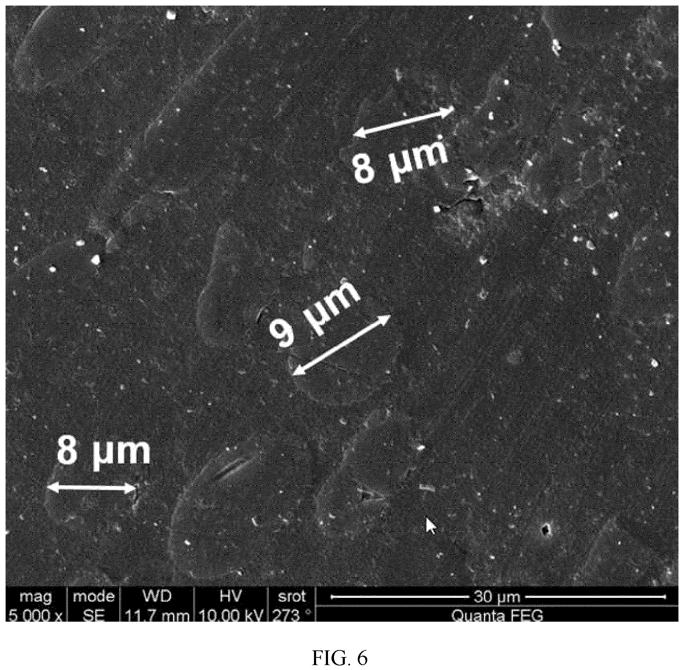

FIG. 6 is a SEM photo of a surface of a pointed end of the tip obtained in Embodiment 2. It can be learned from FIG. 6 that the diameters of the carbon fibers are approximately 5 µm to 10 µm. Orientation directions of at least a part of carbon fibers in a plurality of chopped carbon fibers filled at the pointed end of the tip are perpendicular to a tangent plane of the pointed end of the tip. 5000 to 6000 carbon fibers are exposed from each square millimeter of the pointed end of the tip. In the carbon fibers exposed from the pointed end of the tip, a spacing between adjacent carbon fibers is approximately 5 µm. Surface roughness Ra of the pointed end of the tip is approximately 1.4 µm, and a friction coefficient of the pointed end of the tip is approximately 0.22. In addition, a thickness of the pointed end of the tip ranges from 0.3 mm to 0.5 mm, a dielectric coefficient of the tip is far greater than 2.7, and resistivity of the tip is approximately 0.001 Ω·cm.

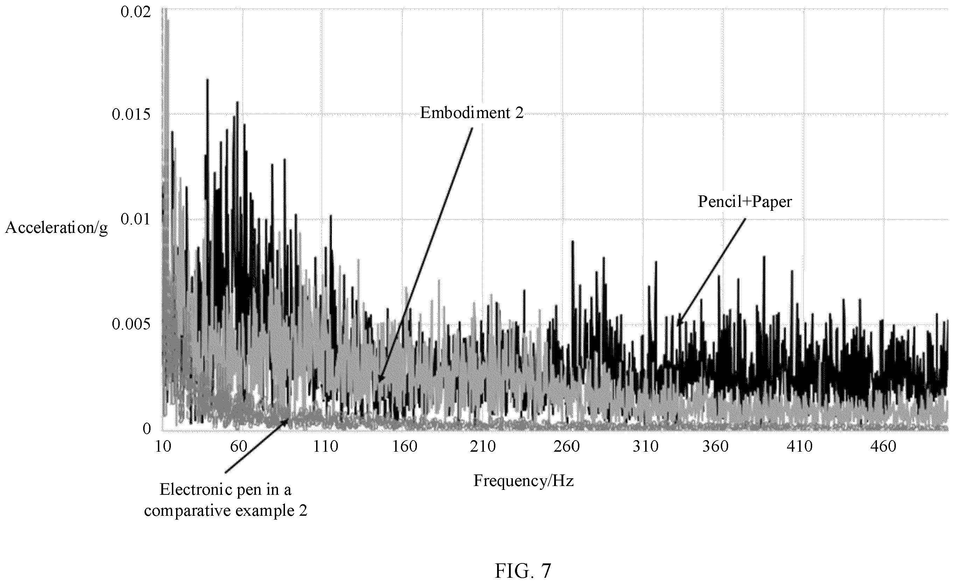

FIG. 7 summarizes writing vibration effect, of the electronic pen in Embodiment 2 in which the chopped carbon fibers are added to the tip and an electronic pen in a comparative example 2 in which a tip includes only polyformaldehyde resin, on a touchscreen and writing vibration effect of a pencil on paper. It can be learned from FIG. 7 that, when the electronic pen in Embodiment 2 of this application is used for writing on the touchscreen, a similarity between an amplitude of the electronic pen in a frequency band of 50 Hz to 500 Hz and a writing amplitude of the pencil on the paper may reach 70%. In addition, writing vibration of the electronic pen in Embodiment 2 of this application is clearly higher than that of the electronic pen in the comparative example 2 to which no chopped carbon fiber is added.

### Embodiment 3

A tip for an electronic pen is provided. The tip is obtained by molding a composite material including polyurethane resin and continuous fiber fillers. Continuous fibers are specifically polyethylene terephthalate fibers with diameters of 16 µm to 23 µm. Hardness of the continuous fiber is greater than that of the polyurethane resin, and mass of the continuous fiber is approximately 80% to 95% of mass of the composite material. A molding manner of the tip may be shown in FIG. 3a. Specifically, the composite material is first injected and molded into a bar, and then the tip of a required shape is obtained through CNC processing.

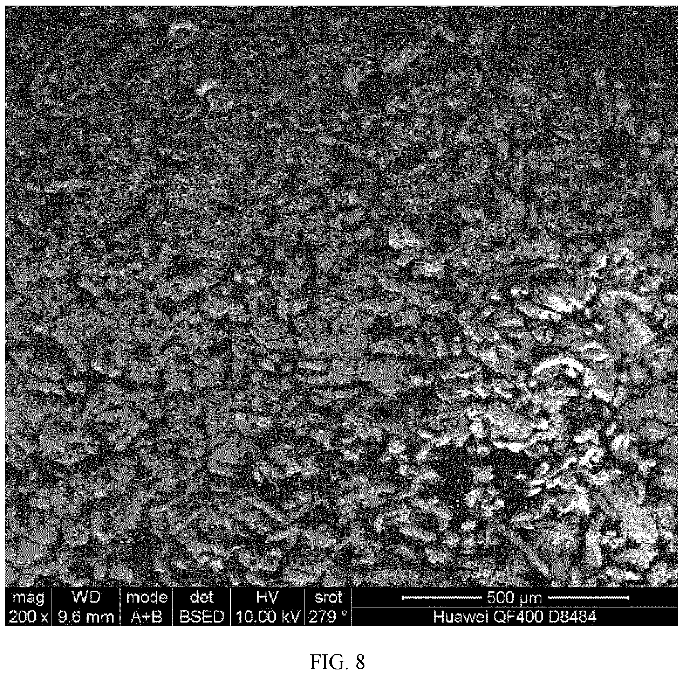

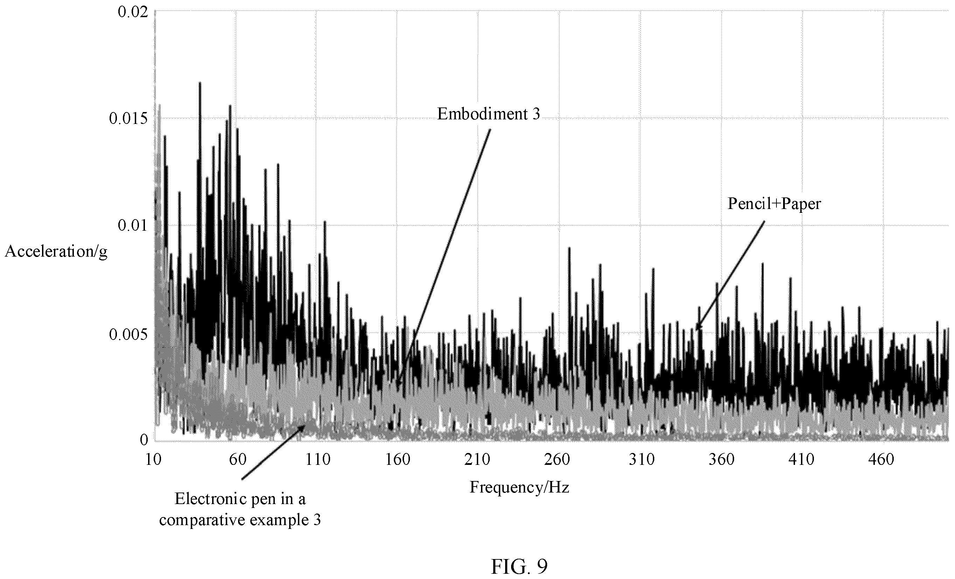

A diagram of a structure of the tip may be shown in FIG. 2a. A thickness of a pointed end of the tip ranges from 0.3 mm to 0.5 mm, and a dielectric coefficient of the pointed end is approximately 3. At least a part of the polyethylene terephthalate fibers are exposed from the pointed end of the tip. Orientation directions of at least a part of a plurality of polyethylene terephthalate fibers filled at the pointed end of the tip are perpendicular to a tangent plane of the pointed end of the tip. 1000 to 10000 carbon fibers are exposed from each square millimeter of the pointed end of the tip. In the carbon fibers exposed from the pointed end of the tip, a spacing between adjacent carbon fibers is approximately 2 µm. Surface roughness Ra of the pointed end of the tip is approximately 0.7 µm, and a friction coefficient of the pointed end of the tip ranges approximately from 0.18 to 0.20. FIG. 8 is a SEM photo of a surface of the pointed end of the tip according to Embodiment 3 of this application. It can be learned from FIG. 8 that the diameters of the continuous polyethylene terephthalate fibers are approximately 16 µm to 23 µm. FIG. 9 summarizes writing vibration effect, of the electronic pen in Embodiment 3 in which the continuous polyethylene terephthalate fibers are added to the tip and an electronic pen in a comparative example 3 in which a tip includes only polyurethane resin, on a touchscreen and writing vibration effect of a pencil on paper. It can be learned from FIG. 9 that, when the electronic pen in Embodiment 3 of this application is used for writing on the touchscreen, a similarity between an amplitude of the electronic pen in a frequency band of 50 Hz to 500 Hz and a writing amplitude of the pencil on the paper may reach 60%. In addition, writing vibration of the electronic pen in Embodiment 3 of this application is clearly higher than that of the electronic pen in the comparative example 3 to which no polyethylene terephthalate fiber is added.

The foregoing descriptions are merely example implementations of this application, and descriptions thereof are specific and detailed, but cannot be understood as a limitation on the scope of the patent in this application. It should be noted that a person of ordinary skill in the art may make some variants and improvements without departing from the concept of this application and the variants and improvements shall fall within the protection scope of this application. Therefore, the protection scope of the patent in this application shall be subject to the following claims.

## Claims

1. A tip, wherein the tip is obtained by molding a composite material, the composite material comprises a tip matrix material and fillers distributed in the tip matrix material, at least a part of the fillers are exposed from a pointed end of the tip, and hardness of the filler is greater than hardness of the tip matrix material.

2. The tip according to claim 1, wherein a friction coefficient of the pointed end of the tip ranges from 0.1 to 0.3.

3. The tip according to claim 1 or 2, wherein 400 to 40000 fillers are exposed from each square millimeter of the pointed end.

4. The tip according to any one of claims 1 to 3, wherein in the fillers exposed from the pointed end, a spacing between adjacent fillers is greater than 0 µm and less than or equal to 100 µm.

5. The tip according to any one of claims 1 to 4, wherein a maximum cross-sectional size of a part, of the filler, exposed from the pointed end ranges from 2 µm to 25 µm.

6. The tip according to any one of claims 1 to 5, wherein the filler comprises one or more of a continuous fiber, a chopped fiber, and a granular filler.

7. The tip according to claim 6, wherein when the filler is a continuous fiber or a chopped fiber, orientation directions of at least a part of fillers filled at the pointed end are perpendicular to a tangent plane of the pointed end of the tip.

8. The tip according to claim 6, wherein a length of the chopped fiber or a grain size of the granular filler is less than a thickness of the pointed end of the tip.

9. The tip according to claim 6, wherein the chopped fiber and the continuous fiber are independently selected from one or more of a glass fiber, a carbon fiber, a mineral fiber, a plant fiber, and a polymer fiber; and the granular filler comprises one or more of talcum, mica, calcium carbonate, barium sulfate, quartz, and glass microspheres.

10. The tip according to any one of claims 1 to 9, wherein the hardness of the filler is less than hardness of a writing medium of an electronic pen.

11. The tip according to any one of claims 1 to 10, wherein the tip matrix material comprises one or more of matrix resin and matrix rubber.

12. The tip according to any one of claims 1 to 11, wherein the tip further comprises a dielectric regulator.

13. The tip according to any one of claims 1 to 12, wherein a dielectric constant of the tip is greater than or equal to 2.5.

14. A tip preparation method, comprising the following steps:
first processing, into a bar, a composite material comprising a tip matrix material and fillers, wherein hardness of the filler is greater than hardness of the tip matrix material, and the filler comprises one or more of a continuous fiber, a chopped fiber, and a granular filler; and when the filler is a continuous fiber or a chopped fiber, an orientation direction of the filler is parallel to a length direction of the bar; and
machining the bar to convert the bar into a tip of a required shape with at least a part of the fillers exposed from a pointed end of the tip.

15. A tip preparation method, comprising the following step:
molding, in a tip mold, a composite material comprising a tip matrix material and fillers, to obtain a tip, wherein at least a part of the fillers are exposed from a pointed end of the tip, hardness of the filler is greater than hardness of the tip matrix material, and the filler comprises one or more of a chopped fiber and a granular filler.

16. The preparation method according to claim 15, wherein the molding, in a tip mold, a composite material, to obtain a tip specifically comprises:
providing the tip mold, wherein the tip mold has a material injection inlet and a tail end away from the material injection inlet, an exhaust outlet is disposed on the tail end, and a cavity shape of the tip mold is substantially consistent with a shape of a to-be-prepared tip, but a cross-sectional size of the tail end is less than a minimum cross-sectional size of the pointed end of the tip; and
injecting the composite material into the tip mold to obtain a pre-prepared product through molding, and cutting the pre-prepared product to obtain the tip of a required shape.

17. A tip preparation method, comprising the following steps:
providing a tip mold, wherein a cavity of the tip mold comprises a tip material filling section and an extended overflow section, the extended overflow section is away from a material injection inlet of the tip mold, an end part that is of the extended overflow section and that is away from the material injection inlet has an exhaust outlet, and a shape of the tip material filling section corresponds to a shape of a to-be-prepared tip; and
injecting, into the tip mold, a composite material comprising a tip matrix material and fillers, processing through molding the composite material into a tip coarse product, and then removing a part that is of the tip coarse product and that corresponds to the extended overflow section, to obtain a tip, wherein at least a part of the fillers are exposed from a pointed end of the tip, hardness of the filler is greater than hardness of the tip matrix material, and the filler comprises a chopped fiber or a granular filler; and when the filler is a chopped fiber, orientations of at least a part of chopped fibers in fillers filled at the pointed end of the tip are perpendicular to a tangent plane of the pointed end of the tip.

18. An electronic pen, comprising the tip according to any one of claims 1 to 13, or a tip obtained by using the preparation method according to claim 14, claim 17, or either of claims 15 and 16.

19. An intelligent terminal, wherein the intelligent terminal is connected to the electronic pen according to claim 18 as an input apparatus.
